# EUROPEAN PATENT APPLICATION

(11) **EP 2 019 297 A1**
(43) Date of publication of application: **28.01.2009**
(21) Application number: 07741493.6
(22) Date of filing: 12.04.2007
(51) Int. Cl.: G01G 19/387, B07C 5/30, B07C 5/36, G01G 11/00

(54) **WEIGHING MACHINE**

(30) Priority: 18.05.2006 JP 2006138870
(71) Applicant: Ishida Co., Ltd., Kyoto-shi Kyoto 606-8392 (JP)
(72) Inventor: KONO, Masami, Ritto-shi, Shiga; 520-3026 (JP); INOUE, Masaru, Ritto-shi, Shiga; 520-3026 (JP); KATAOKA, Koichi, Ritto-shi, Shiga; 520-3026 (JP)
(74) Representative: Altenburg, Udo
(86) International application number: PCT/JP2007/058057
(87) International publication number: WO 2007/135818

(57) **Abstract**

It is an object of the present invention to provide a weighing device having an improved yield when objects having unfixed individual weights such as natural objects are quantitatively weighed and controlled to be discharged.

The weighing device includes: a weighing means; a conveying means; a plurality of discharge parts; discharging means provided corresponding to the discharge parts; and a controlling part. The controlling part includes: a weight setting means for setting a final target weight; an integrating means for integrating the weights of the weighed objects in each of the discharge parts; a calculating means for calculating a final target weight difference in each of the discharge parts, the final target weight difference being a difference between the integration weight and the final target weight; a storing means for storing the final target weight, the integration weight, and the final target weight difference; a comparing means for comparing the weight of the objects measured by the weighing means with the final target weight difference; and a discharging control means for sorting the weighed object to a discharge part having a weight which is no less than the final target weight difference and approximate to the final target weight difference based on the comparison result.

## Description

### Technical Field

The present invention relates to a weighing device which weighs objects while conveying the objects, sorts the objects to predetermined places, and discharges the objects.

### Background Art

The work of boxing a large number of objects carried by a conveyer or the like so that a predetermined target weight is secured lacks efficiency when the work depends on manpower. Particularly, when the objects are natural objects with different weights, the work becomes more inefficient.

In view of this, a weighing device has been proposed which measures the weight of each of the objects carried in by a carry-in conveyer by using a weighing means that is successively provided on a weighing conveyer while conveying the objects, sorts and discharges the objects to a plurality of predetermined places (places where storage boxes of the objects are set), integrates the weights in each of the predetermined places, and sets the drop weights of the objects to each of the predetermined places to the target weight or more (see Patent Document 1).
Patent Document 1: Japanese Unexamined Patent Publication No. 5-57253

### DISCLOSURE OF THE INVENTION

### Problems to be solved by the Invention

According to Patent Document 1 described above, the integration weight of the objects actually sorted may be widely different from the target total weight of the objects sorted to one of the predetermined places. For example, if the actual integration weight is 4,850 g when discharging natural objects such as lettuce or cabbage so that the target total weight of 5,000 g in each of the places is secured, the actual integration weight is less than the target total weight. Even when the individual weight of an object carried next is as heavy as approximately 500 g, the object must be dropped.

However, the actual integration weight becomes approximately 5,350 g, which exceeds the target total weight by approximately 350 g, resulting in a degraded yield. In the case of an average excess weight of 200 g per a predetermined place when there are 20 predetermined places set on one sorting conveyer, the resulting yield degradation is 4,000 g.

A rises in cost caused by the yield degradation a burden for producers, consumers, or the like, and therefore there was a need for improvement of the weighing device.

The present invention provides a weighing device capable of improving the yield when quantitatively weighing objects having unfixed individual weights such as natural objects.

### Means for solving the Problems

A first aspect of the present invention provides a weighing device comprising: a weighing means for weighing weights of objects; a conveying means for conveying the objects weighed by the weighing means; a plurality of discharge parts to which the objects conveyed by the conveying means are discharged; a discharging means for discharging the objects to the discharge parts; and a controlling part, the controlling part comprising: a weight setting means for setting a final target weight of a plurality of objects discharged to the discharge parts; an integrating means for integrating the measured weights measured by the weighing means in each of the discharge parts; a calculating means for calculating a final target weight difference in each of the discharge parts, the final target weight difference being a difference between an integration weight integrated by the integrating means and the final target weight; a storing means for storing the final target weight, the integration weight, and the final target weight difference; and a discharging control means for discharging the weighed objects to a discharge part having a final target weight difference approximate to the measured weights of the objects.

A second aspect of the present invention provides a weighing device as set forth in the first aspect, wherein the measured weights measured by the weighing means are a total weight of at least two objects continuous on a conveying path of the conveying means.

A third aspect of the present invention provides a weighing device as set forth in the first or second aspect, wherein the controlling part sorts the individual objects weighed by the weighing means to predetermined weight ranks, selects a combination of a plurality of objects having a total weight that the final target weight in the same weight rank sorted, and controls so that a plurality of objects newly combined and selected are discharged to a discharge part other than a discharge part used for discharging a plurality of objects previously combined and selected.

A fourth aspect of the present invention provides a weighing device as set forth in the first or second aspect, wherein the controlling part sorts the individual objects weighed by the weighing means to predetermined weight ranks, selects a combination of a plurality of objects having a total weight that is the final target weight in the same weight rank sorted, and controls so that when at least two combinations of a plurality of objects having a total weight that is the final target weight are simultaneously selected in the same weight rank, the two combinations are parallelly discharged to different discharge parts.

A fifth aspect of the present invention provides a weighing device as set forth in the third or fourth aspect, wherein priority is placed to the plurality of discharge parts and a discharge part having higher priority is controlled to be used.

A sixth aspect of the present invention provides a weighing device as set forth in any one of the third to fifth aspects, wherein the conveying means discharges the combined and selected objects when the combined and selected objects reach a prescribed position corresponding to a discharge part into which the objects should be discharged while individually circulating the weighed objects.

A seventh aspect of the present invention provides a weighing device as set forth in any one of the third to fifth aspects, wherein the conveying means circulates a plurality of holding containers which hold individually the weighed objects, and discharges the combined and selected objects when a container holding the objects reach a prescribed position corresponding to a discharge part to which the objects should be discharged.

An eighth aspect of the present invention provides a weighing device as set forth in the sixth or seventh aspect, comprising a plurality of conveying means, wherein all the objects circulated by the plurality of conveying means are combined and selected.

### Effects of the Invention

The weighing device according to the first aspect exhibits the following excellent effect. Since the weighing device discharges the weighed objects to a discharge part having a final target weight difference approximate to the measured weights, the yield can be improved, and the total weight of the objects discharged to each of the discharge parts can be equalized to enhance the quality of shipped products. In the first aspect, the weights of the objects may be integrated at a timing faster than the objects actually discharged to the discharge part.

The weighing device according to the second aspect exhibits the following excellent effect in addition to the effect exhibited by the weighing device according to the first aspect. Since the weight data of the plurality of objects conveyed by the conveying means is treated as a mass of data, the data can be treated at a high speed. Particularly, when the conveying means is of the type that circulates and conveys the objects, the holding time of the objects in the conveying path can be shortened.

The weighing device according to the third aspect exhibits the following excellent effect in addition to the effect exhibited by the weighing device according to the first or second aspect. Whenever the objects are newly combined and selected regardless of the sorted weight rank, a discharge part which is not used is selected from the plurality of discharge parts, and the objects are discharged into the discharge part. Therefore, since the discharge of the objects newly combined and selected can be started without having to wait until all the objects previously combined and selected in the same weight rank are discharged, the discharge cycle can be speeded up to enhance the processing efficiency. In addition, since the discharge parts are not set corresponding to each of the weight ranks, it is possible to do with a smaller number of discharge parts, thereby minimizing the installation space and cost.

The weighing device according to the fourth aspect exhibits the following excellent effect in addition to the effect exhibited by the weighing device according to the first or second aspect. Since a plurality of combinations are parallelly discharged to different discharge parts when the combinations are simultaneously selected in the same weight rank, the objects can be discharged regardless of the discharge situation of the objects of the other combinations, thereby enhancing the processing efficiency.

The weighing device according to the fifth aspect exhibits the following excellent effect in addition to the effect exhibited by the weighing device according to the third or fourth aspect. Since a discharge part to which high priority is placed is first used, the range of the discharge parts to be used can be set to be suitable for post-processing depending on how to place the priority. For example, if priority is placed so that a narrow range of discharge parts are used when the discharged objects are collected by manpower, the worker's moving distance is reduced, thereby reducing the work burden.

The weighing device according to the sixth or seventh aspect exhibits the following excellent effect in addition to the effect exhibited by the weighing device according to any one of the third to fifth aspects. Since the objects of the realized combination can be simultaneously parallelly discharged, the holding time of the objects in the conveying means can be suppressed short, thereby preventing disadvantages such as the deterioration of the objects during the circulation.

The weighing device according to the eighth aspect exhibits the following excellent effect in addition to the effect exhibited by the weighing device according to the sixth or seventh aspect. Since the population of combinations can be enlarged, it is possible to correspond to a large number of weight ranks while securing the accuracy of quantitative weighing.

### BRIEF DESCRIPTION OF THE DRAWINGS

Fig. 1 is a functional block diagram showing a weighing device according to a first embodiment of the present invention;
Fig. 2 is a flow chart showing the procedure of the weighing device according to the first embodiment of the present invention;
Fig. 3 is a schematic view of the weighing device according to the first embodiment of the present invention;
Fig. 4 is a concept view showing processing in the weighing device according to the first embodiment of the present invention;
Fig. 5 is a front view of a weighing device according to a second embodiment of the present invention;
Fig. 6 is a right side view of the weighing device according to the second embodiment of the present invention; and
Fig. 7 shows the content of weight ranks of objects (salmon) sorted in the second embodiment of the present invention.

### Description of the Symbols

1: weighing device (first embodiment)
10: carry-in conveyer
11: weighing conveyer
12: conveyance conveyor
13: weighing means
14: controlling part
141: integrating means
142: storing means
143: calculating means
144: comparing means
145: discharging control means
146: weight setting means
15: discharging means
P: object
D: discharge part
1: weight sorting combinational weighing device
2₁, 2₂: weighing means
4₁₋₁₀: discharge part
5₁, 5₂: circulating means
51: holding container
G: object

### BEST MODE FOR CARRYING OUT THE INVENTION

### [First embodiment of the present invention]

The first embodiment of the present invention relates to a weighing device which is used for shipping natural objects (hereinafter, referred to as "objects P") such as lettuces, the weights of the lettuces being unequal, and combines and discharges a plurality of objects P so that the total weight of the objects P reaches a final target weight set as a shipping boxed weight. The weighing device discharges (drops) the combinations into a plurality of different discharge parts in a simultaneous, parallel manner.

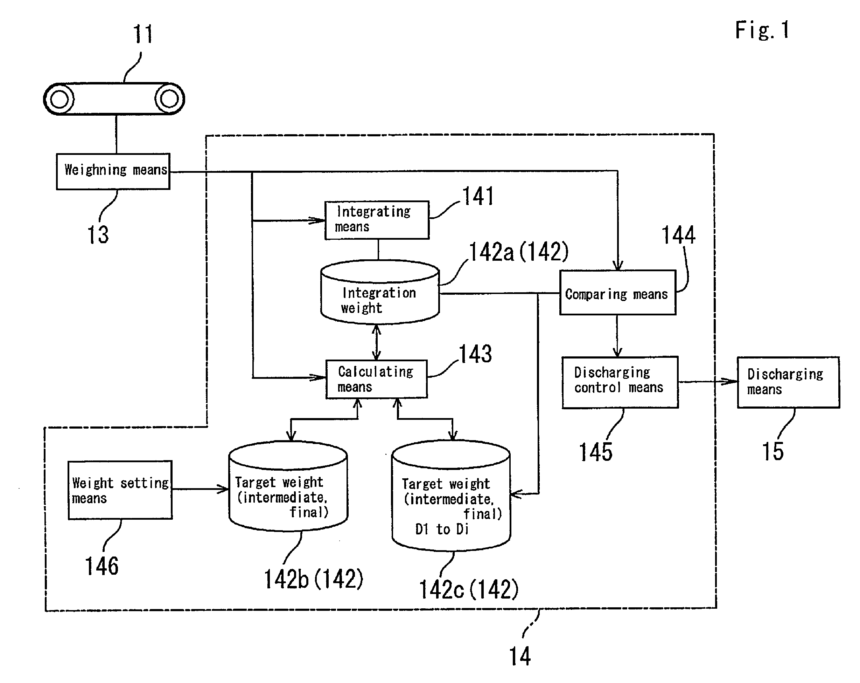

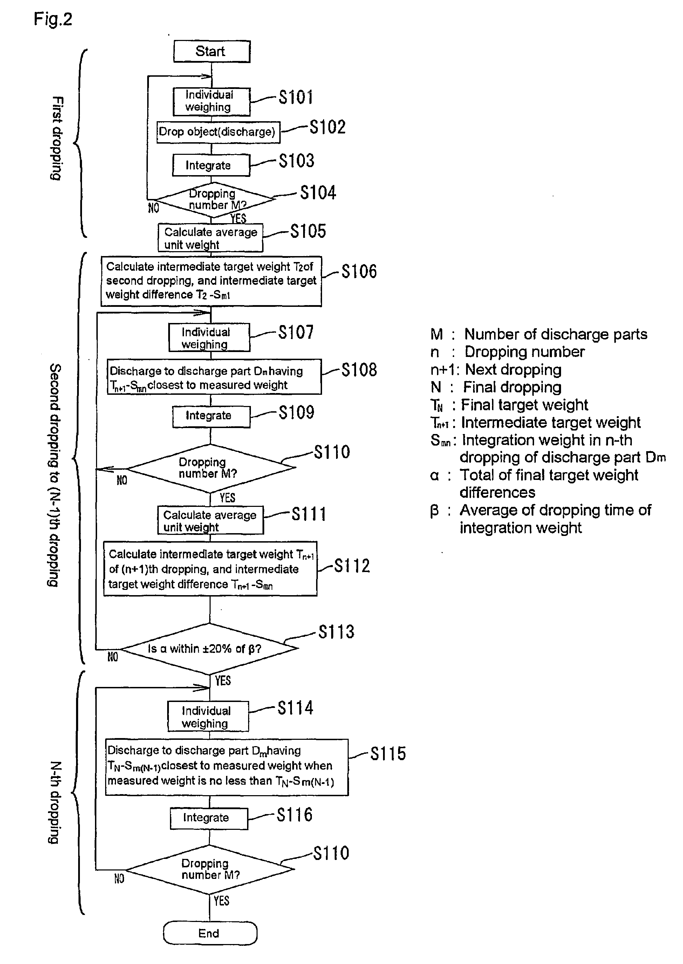

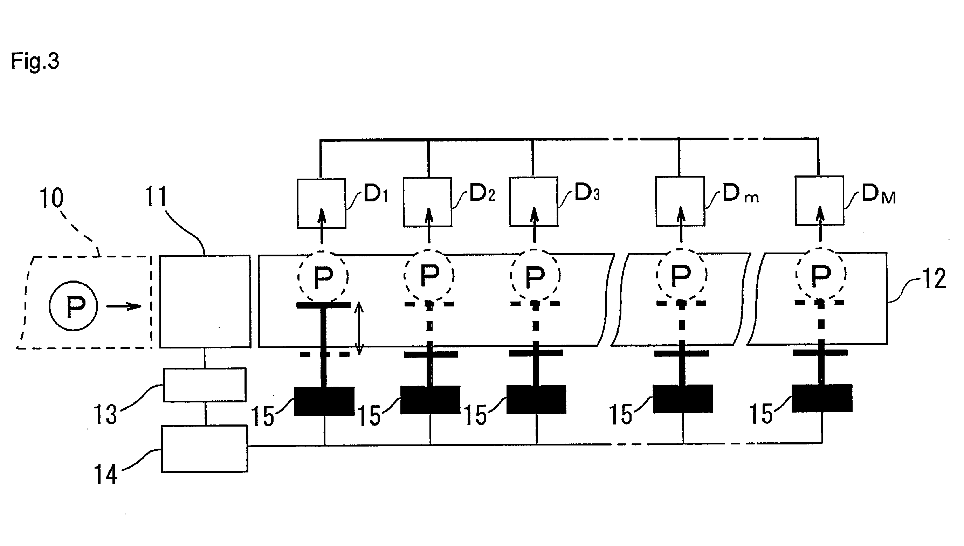

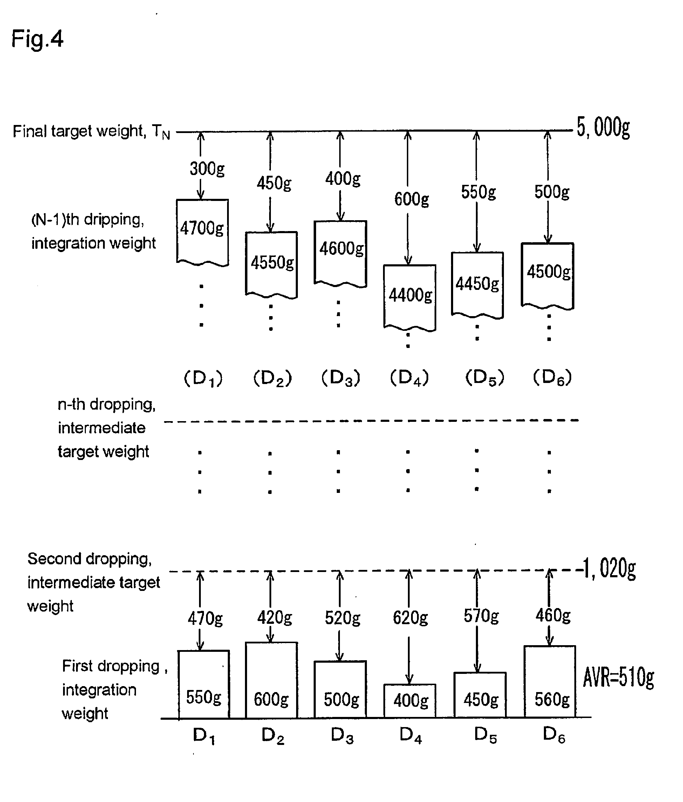

Fig. 1 is a functional block diagram showing a weighing device 1 according to a first embodiment of the present invention. Fig. 2 is a flow chart showing the procedure of the weighing device 1 according to the first embodiment of the present invention. Fig. 3 is a schematic view of the weighing device 1. Fig. 4 is a concept view showing processing in the weighing device 1.

In Fig. 3, reference numeral 10 designates a carry-in conveyer, reference numeral 11 designates a weighing conveyer, reference numeral 12 designates a conveyance conveyor, reference numeral 13 designates a weighing means, reference numeral 14 designates a controlling part, reference numeral 15 designates discharging means, and reference character Dₘ(D₁-D_{M}) designates discharge parts. The discharge part Dₘ is represented by a box shape in Fig. 3. However, the discharge part Dₘ is intended as a broad concept encompassing not only a box, a container, and the like for storing the objects P but also a mere dropping port, a dropping place, or the like for storing the objects P.

### [Summary of weighing device 1]

In Fig. 3, the carry-in conveyer 10 carries the objects P into the weighing conveyer 11 sequentially The weighing means 13 is successively provided on the weighing conveyer 11. The weighing means 13 individually measures the weights of the objects P carried in from the carry-in conveyer 10, and outputs the measurement results to the controlling part 14.

The conveyance conveyor 12 conveys the objects P conveyed from the weighing conveyer 11 to the plurality of discharge parts D₁ to D_{M} provided along a conveying path.

The plurality of discharging means 15 are provided opposite to the discharge parts Dₘ so as to sandwich the conveyance conveyor 12 between the plurality of discharge parts D₁ to D_{M}. The discharging means 15 discharges, that is, drops the objects P conveyed on the conveying path of the conveyance conveyor 12 into a corresponding discharge part Dₘ according to a signal from a discharging control means 145, described later.

### [Means constituting controlling part 14 and function of each of constituting means]

As shown in Fig. 1, the controlling part 14 is composed of an integrating means 141, a storing means 142, a calculating means 143, a comparing means 144, the discharging control means 145, and a weight setting means 146, and generally controls the functions of the constituent means. The functions of these constituent means are as follows.

The weight setting means 146 has a function for setting a final target weight T_{N} of the plurality of objects dropped into each of the discharge parts Dₘ (one discharge part) from the numeric keypad or the like which is not shown, and also has, as necessary, a function for setting an intermediate target weight Tₙ₊₁ which is a target weight in each of dropping times.

The final target weight T_{N} is a target value of the total dropping weight of the objects P dropped N times one by one into each of the discharge parts Dₘ. The intermediate target weight Tₙ₊₁ is a target value of the total dropping weight of the objects P to each of the discharge parts Dₘ in each of the dropping times of the second dropping to the (N-1)th dropping. The intermediate target weight Tₙ₊₁ is set in a fixed manner by the weight setting means 146. In addition, the intermediate target weight Tₙ₊₁ is calculated based on the average unit weight obtained by dividing the total dropping weight of the objects P in the previous dropping time (n-th dropping) or the total dropping weight of the objects P leading up to the previous dropping time (n-th dropping) by the number of corresponding dropped objects. The intermediate target weight Tₙ₊₁ is set for averaging the total dropping weight of each of the discharge parts Dₘ in each of dropping times. The average unit weight is obtained by totalizing integration weights Sₘₙ (described later) of all the objects P dropped into M discharge parts Dₘ and dividing the total by the number M of the discharge parts and the dropping number n.

The integrating means 141 has a function for calculating the integration weight Sₘₙ leading up to the n-th dropping to each of the discharge parts Dₘ in each of dropping times of the first dropping to the N-th dropping (the final dropping).

The calculating means 143 has a function for calculating an intermediate target weight difference Tₙ₊₁-Sₘₙ in each of dropping times. The intermediate target weight difference Tₙ₊₁-Sₘₙ is a difference between the intermediate target weight Tₙ₊₁ calculated based on the average unit weight of the objects P obtained from the dropping weight leading up to the previous dropping time (n-th dropping) or the previous dropping time or the intermediate target weight Tₙ₊₁ set in a fixed manner by the weight setting means 146 and the integration weight Sₘₙ leading up to the n-th dropping in each of the discharge parts Dₘ. Also, the calculating means 143 has a function for calculating a final target weight difference T_{N}-Sₘₙ in each of dropping times. The final target weight difference T_{N}-Sₘₙ is a difference between the final target weight T_{N} set by the weight setting means 146 and the integration weight Sₘₙ leading up to the n-th dropping in each of the discharge parts Dₘ.

The storing means 142 is provided with three storing means 142a, 142b, 142c. The storing means 142a stores the integration weight Sₘₙ of each of the discharge parts Dₘ. The storing means 142b stores the intermediate target weight Tₙ₊₁ and the final target weight T_{N}. The storing means 142c has a function for storing the intermediate target weight difference Tₙ₊₁-Smn of each of the discharge parts Dₘ and the final target weight difference T_{N}-Sₘₙ.

The comparing means 144 has a function for mutually comparing a difference between the intermediate target weight difference Tₙ₊₁-Sₘₙ of each of the discharge parts Dₘ and the weights of the objects P newly carried in, and a function for mutually comparing a difference between the final target weight difference T_{N}-Sₘₙ of each of the discharge parts Dₘ and the weights of the objects P newly carried in. The comparison result obtained by the comparing means 144 is transmitted to the discharging control means 145.

The discharging control means 145 has a function for recognizing, from the discharge part D₁ to D_{M}, a discharge part Dₘ having an intermediate target weight difference Tₙ₊₁-Sₘₙ closest to the individual weights of the objects P newly carried in based on the comparison result obtained by the comparing means 144 until the (N-1)th dropping (before the final dropping) and for transmitting a signal for dropping the objects P into a discharging means 15 that corresponds to the discharge part Dₘ. Also, in the N-th dropping time (the final dropping), the discharging control means 145 has a function for recognizing, from the discharge parts D₁ to D_{M}, a discharge part Dₘ in which the individual weights of the objects P newly carried in are no less than the final target weight difference T_{N}-Sₘₙ and are closest to the final target weight difference T_{N}-Sₘₙ based on the comparison result and for transmitting a signal for dropping the objects P into a discharging means 15 that corresponds to the discharge part Dₘ.

### [Structure of discharge control]

Hereinafter, the specific structure of discharge control obtained by the weighing device 1 according to this embodiment will be described.

### [Discharge control of first dropping]

The discharge control of the first dropping will be described based on Figs. 1 to 3. First, as shown in Fig. 3, objects P to be dropped first time are sequentially carried in from the carry-in conveyer 10, and the objects P are individually weighed by the weighing means 13 successively provided on the weighing conveyer 11 (S101). As shown in Fig. 3, each of the objects P is dropped into each of the discharge parts Dₘ by the discharging means 15 from the conveying path of the conveyance conveyor 12 (S102). In that case, the measured weight of each of the objects P is stored in a predetermined storing area in the storing means 142a as the integration weight Sₘ₁ of each of the discharge parts Dₘ (S103).

When the dropping of the objects P to all the discharge parts D₁ to D_{M} is confirmed (S104), the average unit weight of the first dropping in each of the discharge parts Dₘ is calculated by the calculating means 143 (S105). This average unit weight is obtained by dividing the added value (S₁₁+S₂₁+ ·· +Sₘ₁+ ·· +S_{M1}) of the integration weight Sₘ₁ of each of the discharge parts Dₘ by the number M of the discharge parts and dropping time 1(n). Next, a value obtained by doubling ((n+1) times) the above average unit weight is calculated as an intermediate target weight T₂(Tₙ₊₁) of the second dropping ((n+1)th dropping) (S106), and is stored in the predetermined storing area in the storing means 142b.

Also, an intermediate target weight difference T₂-Sₘ₁ (Tₙ₊₁-Sₘₙ) in the second dropping, which is calculated in each of the discharge parts Dₘ by the calculating means 143 (S106), is stored in the predetermined storing area of the storing means 142c. This intermediate target weight difference T₂-Sₘ₁ is calculated by subtracting the measured weight (integration weight Sₘ₁) of the first dropping in each of the discharge parts Dₘ from the intermediate target weight T₂.

The discharge control of the first dropping will be described based on specific numerical values shown in Fig. 4. Herein, six discharge parts D₁ to D₆ are provided, and the final target weight T_{N} common to the discharge parts is set to 5,000 g. As shown in Fig. 4, when the weights of the objects P discharged to each of the discharge parts in the first dropping are 550 g, 600 g, 500 g, 400 g, 450 g, and 560 g, then the calculating means 143 calculates the average unit weight 510 g (= (550 g + 600 g + 500 g + 400 g + 450 g + 560 g)/6) of the discharge parts D₁ to D₆. Further, the calculating means 143 calculates the intermediate target weight T₂ (1,020 g = 510 g times 2) of the second dropping. The intermediate target weight T₂ is stored in the predetermined storing area in the storing means 142b.

Next, the intermediate target weight difference of the second dropping in each of the discharge parts is calculated as a difference T₂-Sₘ₁ between the intermediate target weight T₂ (1,020 g) and the integration weight Sₘ₁ (550 g, 600 g, 500 g, 400 g, 450 g, 560 g) in the first dropping of each of the discharge parts. That is, in the discharge part D₁, the intermediate target weight difference is calculated as 1,020 g - 550 g = 470 g. The intermediate target weight differences in the discharge parts D₂ to D₆ are also similarly calculated as 420 g, 520 g, 620 g, 570 g, and 460 g. The intermediate target weight differences T₂-Sₘ₁ are stored in the predetermined storing area in the storing means 142c.

### [Discharge control of second dropping]

Next, the discharge control of the second dropping will be described based on Figs. 1 to 3. First, as shown in Fig. 3, the objects P dropped second time from the carry-in conveyer 10 are sequentially carried in, and the objects P are individually weighed by the weighing means 13 successively provided on the weighing conveyer 11 (S107). The measurement data is transmitted to the comparing means 144. The comparing means 144 reads the intermediate target weight difference T₂-Sₘ₁ of the second dropping of each of the discharge parts Dₘ from the storing means 142c, and compares the read intermediate target weight difference T₂-Sₘ₁ with the weights of the individually weighed objects P. The comparison result is transmitted to the discharging control means 145. The discharging control means 145 sends a signal to the discharging means 15 corresponding to the discharge part Dₘ so as to drop the objects P into a discharge part Dₘ having an intermediate target weight difference T₂-Sₘ₁ closest to the measured weights of the objects P based on the comparison result. The discharging means 15, which receives the signal, drops the objects P into the discharge part Dₘ (S108).

The measured weights of the objects P are integrated to the integration weight Sₘ₁ of the first dropping of the discharge part Dₘ into which the objects P are dropped (S109). The new integration weight Sₘ₂ obtained by this integration is stored in the predetermined storing area in the storing means 142a.

When the second object dropping to all the discharge parts D₁ to D₆ is confirmed (S110), the average unit weight of the second dropping is calculated by the calculating means 143 (S111). The average unit weight is obtained by (S ₁₂+S₂₂+ · + Sₘ₂+ · +S_{M2})/(M×2). Herein, "2" used for the division is the dropping number. Next, a value obtained by tripling the average unit weight is calculated as an intermediate target weight T₃ (Tₙ₊₁) to the third dropping ((n+1)th dropping) (S112). The value is stored in the predetermined storing area in the storing means 142b.

An intermediate target weight difference T₃-Sₘ₂ (Tₙ₊₁-Sₘₙ) in the third dropping is calculated in each of the discharge parts Dₘ by the calculating means 143, and stored in the predetermined storing area in the storing means 142c. The intermediate target weight difference T₃-Sₘ₂ of each of the discharge parts Dₘ is obtained by subtracting the integration weight Sₘ₂ after the second dropping end in each of the discharge parts Dₘ from the intermediate target weight T₃ common to all the discharge parts Dₘ.

The discharge control of the second dropping will be described based on the specific numerical values shown in Fig. 4. For example, when the individual weight of the object P carried in first in the second dropping is 425 g, the individual weight of 425 g is compared with the intermediate target weight difference T₂-Sₘ (470 g, 420 g, 520 g, 620 g, 570 g and 460 g) of the second dropping shown in Fig. 4. Based on the comparison result indicating that the 425 g individual weight is closest to the 420 g intermediate target weight difference of the discharge part D₂, the object P is dropped into the discharge part D₂ by the discharging control means 145.

The other objects P in the second dropping are also subjected to the same processing. The dropping of the objects P to all the discharge parts D₁ to D₆ is confirmed (S110), the discharge processing of the second dropping is completed, and the average unit weight is calculated by the calculating means 143.

The processings of S107 to S112 described above are succeedingly repeated up to the third dropping, the fourth dropping ··the (N-1)th dropping. After the dropping of the objects P to all the discharge parts D₁ to D₆ is confirmed up to the (N-1)th dropping after the second dropping (S110), it is judged whether or not the next dropping is the N-th time (the final dropping) (S113).

### [Processing for judging whether or not next dropping is final dropping]

It is judged whether or not the next dropping is the final dropping (N-th dropping) by comparing a total value α (hereinafter, merely referred to as α) of the final target weight differences T_{N}-Sₘₙ with a total value β (hereinafter, simply referred to as β) of the average dropping weights obtained by dividing the integration weight Sₘₙ up to the previous dropping time by the dropping number n. Specifically, it is judged whether or not the next dropping is the final dropping according to whether or not α is contained in the weight range of ±20% of β.

Specifically, the calculating means 143 calculates the final target weight difference T_{N}-Sₘₙ in addition to the intermediate target weight difference Tₙ₊₁-Sₘₙ, and calculates the total value of the final target weight differences T_{N}-Sₘₙ of all the discharge parts as α.

Also, the calculating means 143 calculates an average dropping weight Sₘₙ/n obtained by dividing the integration weight Sₘₙ by the dropping number n for each of the discharge parts, and calculates the total value of the average dropping weights Sₘₙ /n of all the discharge parts as β. The calculated total values α and β are stored in the predetermined storing area in the storing means 142a.

It is confirmed whether or not the M objects P are dropped in each of the dropping times (S110), and the target weight of the next dropping is calculated (S111, S112). Then, the calculating means 143 judges whether no not α is contained in the weight range of ±20% of β (S113).

When α is not contained in the weight range of ±20% of β, it is judged that the next dropping is not yet the final dropping (N-th dropping). The object P discharged next time is discharged to a discharge part Dₘ having an intermediate target weight difference closest to the measured weight of the object P. On the other hand, when α is contained in the weight range of ±20% of β, it is judged that the next dropping is the final dropping, and the discharge control peculiar to the final dropping to be described later is carried out.

The processing for judging whether or not the next dropping is the final dropping will be described based on the specific numerical values shown in Fig. 4. As shown in Fig. 4, when the integration weights S_{1(N-1)} to S_{6(N-1)} of the discharge parts D₁ to D₆ up to the (N-1)th dropping are 4,700 g, 4,550 g, 4,600 g, 4,400 g, 4,450 g, and 4,500 g, then the final target weight differences T_{N}-S_{m(N-1)} of the discharge parts D ₁ to D₆ are 300 g, 450 g, 400 g, 600 g, 550 g, and 500 g, and the final target weight differences T_{N}-S_{n(N-1)} are obtained by subtracting the integration weight from the final target weight of 5,000 g. The total value α of these is 2,800 g.

Also, as shown in Fig. 4, when the (N-1)th dropping is the 9th time, the integration weights of the discharge parts D₁ to D₆ are 4,700 g, 4,550 g, 4,600 g, 4,400 g, 4,450 g, and 4,500 g, and thereby the average unit weights of these are 4,700/9g, 4,550/9g, 4,600/9g, 4,400/9g, 4,450/9g, and 4,500/9g. The total value β of these is calculated to be approximately 3,022 g.

Furthermore, the calculating means 143 calculates the weight range (2,418 g to 3,628 g) which is ±20% based on the total value β (3,022 g). The comparing means 144 compares and judges whether or not the total value α (2,800 g) is included in the weight range (2,418 g to 3,628 g) (S113). Herein, since 2,800 g (β) is more than 2,418 g and less than 3,628 g, the total value α is judged to be in the weight range, and it is recognized that the next dropping is the final dropping.

### [Discharge control of final dropping]

The discharge control of the final dropping will be described. The discharge control of the final dropping (N-th dropping) discharges the objects P to a discharge part Dₘ having such a relationship that the measured weights of the objects P carried in are closest to the difference (final target weight difference T_{N}-S_{m(N-1)}) between the final target weight T_{N} and the integration weight S_{m(N-1)} up to the (N-1)th dropping and no less than the final target weight difference T_{N}-S_{m(N-1)}.

The discharge control of the final dropping will be described based on the specific numerical values shown in Fig. 4. As shown in Fig. 4, the final target weight differences T₁₀-Sₘ₉ (T_{N}-S_{m(N-1)}) of the discharge parts D₁ to D₆ are 300 g, 450 g, 400 g, 600 g, 550 g, and 500 g. If the objects which are no less than these weight differences are dropped, the final target weight of 5,000 g is reached.

The objects P of the tenth dropping (N-th dropping) are newly carried in from the carry-in conveyer 10. The objects P are individually weighed by the weighing means 13 successively provided on the weighing conveyer 11 (S114). The measured weights are transmitted to the comparing means 144. The comparing means 144 reads the final target weight differences T₁₀-Sₘ₉ of the discharge parts D₁ to D₆ stored in the storing means 142c, compares the final target weight difference with the measured weight for each of the discharge parts, and transmits the comparison result and the final target weight difference of each of the discharge parts to the discharging control means 145 (Fig. 1).

For example, when the measured weight of the objects P carried in from the carry-in conveyer 10 is 575 g, the comparing means 144 judges that the difference between the final target weight difference (600 g) of D₄ and the measured weight, and the difference between the final target weight differences (550 g) of D₅ and the measured weight are 25 g, and the weights of discharge parts D₄ and D₅ are the closest to the measured weight (575 g). The comparing means 144 transmits the comparison result and the final target weight differences according to the discharge parts D₄, D₅ to the discharging control means 145.

The discharging control means 145 receives the comparison result and determines a discharge part Dₘ which is closest to the measured weight based on the comparison result and has the final target weight difference T₁₀-Sₘ₉ being no less than the measured weight. The discharging control means 145 discharges the objects P to the discharge part. Herein, since the weight (575 g) of the objects P newly carried-in is no less than the final target weight difference (550 g) of D₅, the discharging control means 145 transmits a signal to the discharging means 15 that corresponds to the discharge part D₅, and the discharging means 15 discharges the objects to the discharge part D₅ (S115).

The weights of the dropping objects are integrated in each of the discharge part, and the final integration weights are respectively calculated (S116).

Hereinafter, the same processing is repeated, and when it is confirmed that the objects are dropped into all the discharge parts D₁ to D₆ (S117), a series of discharge processings are completed.

### [Features of weighing device 1 according to first embodiment]

The weighing device 1 according to the above first embodiment is characterized by being provided with the controlling part 14. The controlling part 14 includes the weight setting means 146, the integrating means 141, the calculating means 143, the storing means 142, the comparing means 144, and the discharging control means 145. The weight setting means 146 sets the final target weight T_{N} of the plurality of objects P discharged to the discharge part Dₘ. The integrating means 141 integrates the measured weights measured by the weighing means 11 in each of the discharge parts Dₘ. The calculating means 143 calculates the final target weight difference T_{N}-Sₘₙ in each of the discharge parts Dₘ, which is a difference between the integration weight Sₘₙ integrated by the integrating means 141 and the final target weight T_{N}. The storing means 142 stores the final target weight T_{N}, the integration weight Sₘₙ, and the final target weight difference T_{N}-Sₘₙ. The comparing means 144 compares the weights of the objects P measured by the weighing means 11 with the final target weight difference T_{N}-Sₘₙ. The discharging control means 145 discharges the weighed objects to a discharge part Dₘ having a final target weight difference T_{N}-Sₘₙ closest to the measured weights based on the comparison result. This prevents a situation where the discharge weight total serving as the shipped product weight exceeds the final target weight T_{N} to a large extent, and as a result, the yield can be improved for producers. Also, since the shipped product weight is naturally concentrated near the final target weight T_{N}, weight variation among the products (box) is suppressed, and the product quality can be enhanced for consumers.

The weighing device 1 according to the above first embodiment is characterized in that the discharging control means 145 discharges the weighed objects to a discharge part Dₘ in which the measured weights of the objects is no less than the final target weight difference T_{N}-Sₘₙ. This prevents a situation where the shipped product weight is less than a shipping boxed weight (final target weight T_{N}), and as a result, the generation of dissatisfaction of the consumers can be certainly prevented.

The weighing device 1 according to the above first embodiment is characterized in that the calculating means 143 calculates the intermediate target weight difference Tₙ₊₁-Sₘₙ, which is the difference between the intermediate target weight Tₙ₊₁ and the integration weight Sₘₙ in each of dropping times of the objects P; the storing means 142 stores the intermediate target weight Tₙ₊₁ and the intermediate target weight difference Tₙ₊₁-Sₘₙ; and the discharging control means 145 discharges the weighed objects to a discharge part having a intermediate target weight difference Tₙ₊₁-Sₘₙ closest to the measured weights of the objects. Therefore, the discharge weights of the objects P discharged to the discharge parts Dₘ are adjusted while being divided into a plurality of times in each of dropping times to attain further improvement of the yield and enhanced quality caused by equalization of the product weights.

The weighing device 1 according to the above first embodiment is characterized in that the intermediate target weight Tₙ₊₁ is calculated based on the average unit weight of the objects P discharged to each of the discharge parts Dₘ. Therefore, the intermediate target weight Tₙ₊₁ is calculated in each of dropping times based on the actual object discharge weight, and as a result, the yield can be further improved for the producers. Also, the weight variation between the products (boxes) is suppressed, and the shipped product weight can be equalized to further enhance the product quality for the product consumers.

### [Modifications of first embodiment]

(1) In the above first embodiment, the discharge control based on the intermediate target weight difference is carried out in each of the dropping times of the second dropping time to the (N-1)th dropping time. However, the present invention is not limited thereto. The carried-in objects P may be sequentially dropped into the discharge parts Dₘ regardless of the measured weights of the objects up to the second dropping time to the (N-1)th dropping time to carry out only the processing for judging whether or not the dropping time is the final dropping. When the dropping time is judged as the final dropping, the discharge control based on the final target weight difference described above is carried out. This modification can also attain an improvement in the yield and the enhanced quality of the shipped products caused by the equalization of the object weights as in the above first embodiment.

(2) In the above first embodiment, the intermediate target weight is calculated based on the average individual weight of the objects P previously dropped. However, the present invention is not limited thereto. The individual weights of the objects P are set in advance in a fixed manner, and the intermediate target weight may be calculated based on the individual weights. For example, in the above first embodiment, the individual weight used in order to calculate the intermediate target weight is fixed to 500 g, and the discharge control may be carried out with the intermediate target weight of the second dropping time being set to 1,000 g and the intermediate target weight of the third dropping time being set to 1,500 g ·· This modification also exhibits the same effect as that of the above embodiment.

(3) In the above first embodiment and the above modification (1), the judgment as to whether or not the next dropping is the final dropping is carried out according to whether or not the total α of the final target weight differences of the discharge parts D₁ to D_{M} is contained in the weight range of ±20% of the dropping time average β of the integration weight in the discharge parts D₁ to D_{M} up to the (N-1)th dropping time. However, the present invention is not limited thereto. The number of the objects P dropped into one discharge part may be fixed in advance. When the dropping number is subtracted one by one from the above scheduled dropping number on every dropping time to reach 0 (zero), or when the dropping number is integrated one by one from 0 on every dropping time and the integrated number reaches the above scheduled dropping number, it may be judged that the next dropping is the final dropping. This modification also exhibits the same effect as that of the above first embodiment or the like.

(4) In the above first embodiment and the above modifications (1) to (3), each of the objects P individually weighed by the weighing means 13 is discharged to each of the discharge parts Dₘ, and the individual weight data thereof are integrated one by one by the integrating means 141. However, the present invention is not limited thereto. The selection and integration of weight of the objects P discharged to one discharge part may be carried out not one by one but collectively for the plurality of objects. For example, the weight data of the plurality of objects on the conveying path of a conveying means 12 may be added up, and the added-up weight data may be treated as one data. The plurality of objects may be discharged to one discharge part Dₘ, and the added-up data may be integrated by the integrating means 141. Particularly, when the plurality of objects collectively selected are continuous on the conveying path, the speed-up of the discharge processing can be attained. Further, when the conveying means 12 is a system circulating and conveying the objects, the holding time of the objects on the conveying path can be shortened.

(5) In the above first embodiment and the above modifications (1) to (4), the number of the objects discharged in each of the dropping times is fixed. However, the number of the discharged objects may be changed according to the dropping number. For example, one object is discharged to one discharge part for one dropping time until a predetermined dropping time or a predetermined weight is reached. When the predetermined dropping time or the predetermined weight is reached, the plurality of objects having the same weight (including the weight in an allowable range) as the final target weight difference to one discharge part may be combined and selected, and the plurality of objects may be discharged collectively or separately. Herein, the plurality of objects combined and selected include an object continuously conveyed on the conveying path and an object conveyed in a discontinuous state where the object discharged to another discharge part Dₘ is interposed on the conveying path.

(6) In the above first embodiment and the above modifications (1) to (5), the objects P are conveyed one by one on the conveying path of the conveyance conveyor 12. However, the present invention is not limited thereto. The plurality of objects may be stored in a container such as a packet, and be conveyed. The plurality of objects may be collectively discharged to one discharge part by the discharging means. Also, the plurality of objects may be individually weighed by the weighing means 13, and the objects may be then collectively stored in the container. In addition, the objects may be also collectively weighed with the objects stored in the container. The number of the objects stored in one container is not limited to plural number, and may be one, as a matter of course.

### [Second embodiment of the present invention]

The second embodiment of the present invention relates to a weighing device which is used for shipping salmon (hereinafter, referred to as objects G) as natural objects, the weights of the salmon being unequal, and combines and discharges a plurality of objects G so that the total weight of the objects G is a predetermined weight (final target weight) set as a shipping boxed weight. The weighing device discharges (drops) the combinations thereof into different discharge parts in a simultaneous, parallel manner.

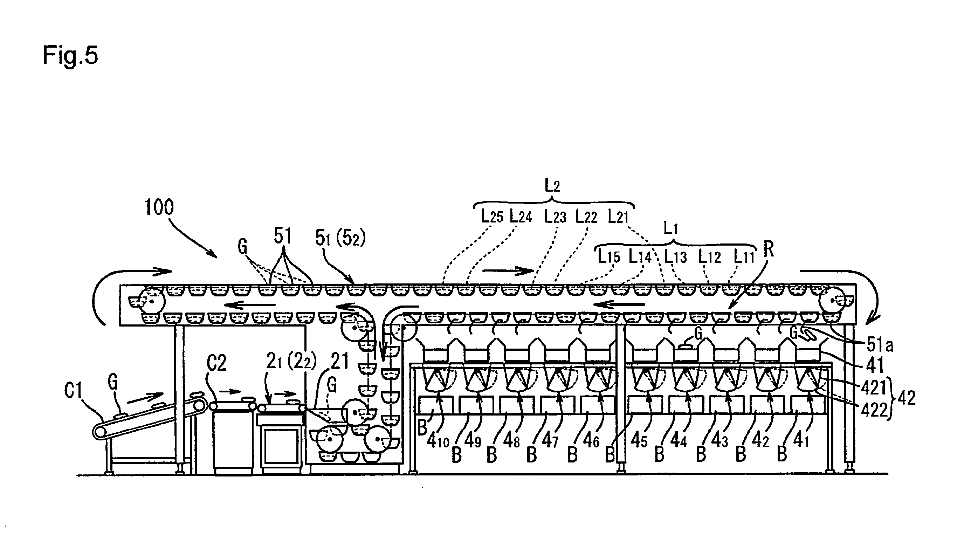

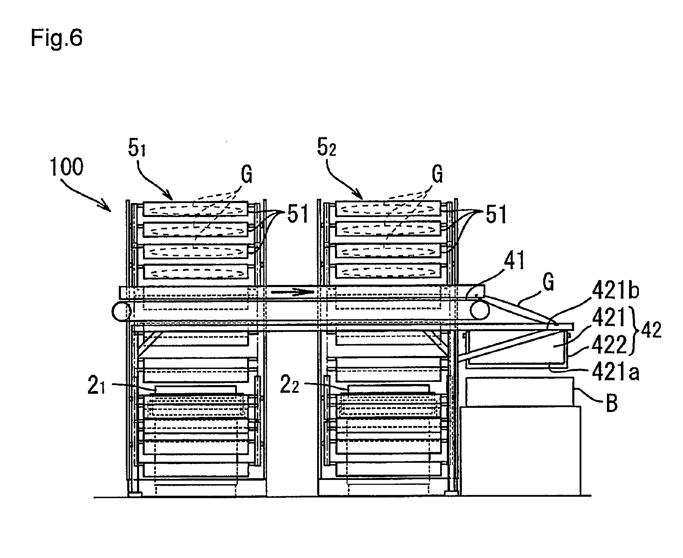

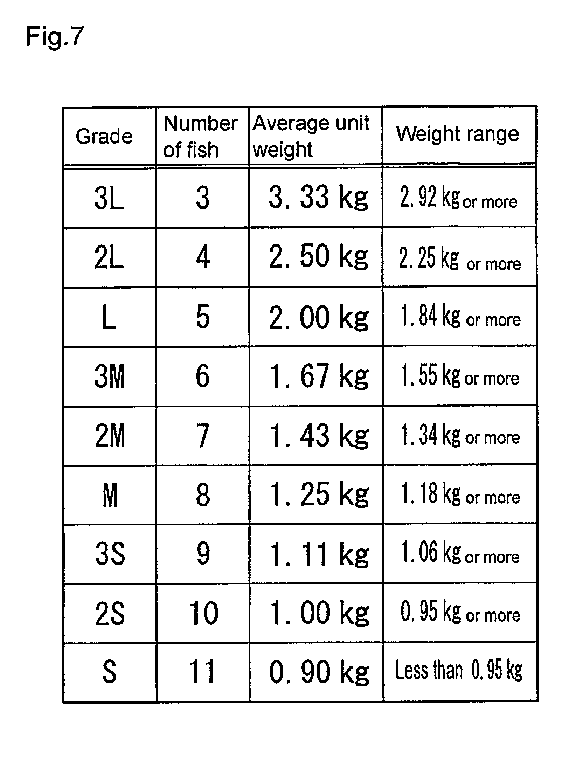

Fig. 5 is a front view of a weighing device 100 according to the second embodiment of the present invention. Fig. 6 is a right side view thereof. Fig. 7 shows the content of the weight ranks of objects sorted by the weighing device 100.

### [Weighing device 100]

The weighing device 100 shown in Figs. 5, 6 is provided with two (a plurality of) weighing means 2₁, 2₂, an unillustrated controlling part 3, a plurality of discharge parts 4₁₋₁₀, and two (a plurality of) conveying means 5₁, 5₂. The weighing means 2₁, 2₂ individually measure the weights of the objects G sequentially carried in from an upper process. The controlling part 3 sorts the weighed individual objects to a plurality of predetermined weight ranks based on the measurement result obtained by the weighing means 2₁, 2₂, combines and selects the plurality of objects G having a total weight that is a predetermined weight in the same weight rank sorted. The discharge parts 4₁₋₁₀ are used in order to discharge the plurality of objects G combined and selected. The conveying means 5₁, 5₂ individually circulate the weighed objects G in a plurality of holding containers 51 ··51 and discharge the combined and selected objects when the objects reach a prescribed position corresponding to one discharge part 4ₓ into which the objects G should be discharged, among the plurality of discharge parts 4₁₋₁₀. As for the holding containers 51, numeral indications in the figures are partially omitted.

In the second embodiment, the objects G carried into the weighing device 100 are salmon. The weighing means 2₁, 2₂ individually weigh these salmon one by one. The weighed salmon are sorted to a plurality of weight ranks, specifically, any one of nine weight ranks of 3L, 2L, L, 3M, 2M, M, 3S, 2S and S shown in Fig. 7 by the controlling part in order to secure a combination of salmon of the same weight rank whose total weight is a predetermined weight of 10 kg ±α (±α: permissible error), which is the final target weight. That is, for the salmon of the same weight rank, the combination of the number of fish corresponding to the weight rank is generated, and the total weight is combined and selected to be the predetermined weight. For example, the salmon of grade L are combined and selected so that the total weight of five salmon is 10 kg±α. The combined and selected salmon are discharged to one discharge part 4ₓ specified by the controlling part 3 from the plurality of holding containers 51 ··51 individually holding the salmon. In the discharge part 4ₓ, the salmon are once summarized, and are further discharged to a receiving box B. A worker takes out the receiving box B into which the salmon are dropped in exchange for an empty receiving box B, boxes the salmon in the taken-out receiving box B in a shipping pack box, and applies a grade indication to the pack box.

### [Weighing means 2₁, 2₂]

Weighing means 2₁, 2₂, which are parallelly arranged as shown in Fig. 6, are weighing conveyers which convey the objects G continuously carried in by a supply conveyer C1 and a taking-in conveyer C2 to a downstream and individually measure the weights of objects. Also, the weighing means 2₁, 2₂ individually supply the weighed objects G to the holding containers 51 ··51 of the conveying means 5₁, 5₂ via a timing shutter 21 equipped on the terminal side of each of the conveyers, and output the measurement data signal to the controlling part 3. The timing shutter 21 is provided with a door which is opened and closed at the bottom and is not shown. The weighed objects G are once held by closing the door. The door is opened with the timing of the empty holding containers 51 passing downward, and the objects G are supplied to the empty holding containers 51.

### [Controlling part 3]

The controlling part 3 sorts the weighed objects G to the predetermined weight ranks, specifically any one of nine weight ranks of 3L, 2L, 3M, 2M, M, 3S, 2S, and S based on the measurement data signal from the weighing means 2₁, 2₂, and stores the weight ranks and weight data in association with the holding containers 51 to which the weighed objects G are supplied. Also, based on the weight ranks and weight data stored in association with the holding containers 51, the controlling part 3 selects a combination in which the total weight of only the objects of the same weight rank is the above predetermined weight from all the objects which are held in the holding containers 51 with which any one of the conveying means 5₁, 5₂ is provided and are not yet combined and selected. All the objects G circulated by two conveying means 5₁, 5₂ are combined and selected. Furthermore, the controlling part 3 outputs a control signal to the conveying means 5₁, 5₂ so that a plurality of objects newly combined and selected are discharged to a discharge part 4ₓ other than a discharge part used for discharging a plurality of objects previously combined and selected. The objects G after a predetermined time has passed without being combined and selected with the objects G held in the holding containers 51 is compulsorily treated so that the objects G are certainly combined and selected in order to secure the freshness.

That is, whenever the controlling part 3 newly combines and selects the objects regardless of the weight ranks of the combined and selected objects, the controlling part 3 selects one discharge part 4ₓ which is not used from the plurality of discharge parts 4₁₋₁₀, and outputs to the conveying means 5₁, 5₂ a control signal to cause the objects to be discharged to the discharge part 4ₓ. Therefore, when the controlling part 3 selects simultaneously a plurality of combinations of a plurality of objects having the total weight being the predetermined weight in the same weight rank, the controlling part 3 outputs a control signal discharging the plurality of combinations simultaneously parallelly to different discharge parts 4ₓ. The controlling part 3 does not randomly select one discharge part 4ₓ to which a plurality of objects G newly combined and selected are discharged from unused discharge parts. The controlling part 3 places high priority in order from the right side discharge part 4₁ in the discharge parts 4₁₋₁₀ in Fig. 5, and produces a control signal so that the discharge part having the highest priority is always used.

The controlling part 3 includes a weight setting means, an integrating means, a calculating means, a storing means, and a discharging control means as in the controlling part 14 of the weighing device 1 according to the first embodiment in order to carry out the above processing. The weight setting means sets a predetermined weight which is a final target weight of a plurality of objects G discharged to the discharge part 4ₓ. The integrating means integrates the measured weights of the objects G measured by the weighing means 2₁, 2₂ in each of the discharge parts 4ₓ. The calculating means calculates a final target weight difference in each of the discharge parts 4ₓ, the final target weight difference being a difference between the integration weight integrated by the integrating means and the final target weight. The storing means stores the final target weight, the integration weight, and the final target weight difference. The comparing means compares the weights of the objects G measured by the weighing means 2₁, 2₂ with the final target weight difference. The discharging control means discharges the weighed objects to the discharge part in which the measured weights are approximate to the final target weight difference based on the comparison result.

### [Discharge parts 4₁₋ₗ₀]

As shown in Fig. 5, the plurality of discharge parts 4₁₋₁₀ are provided along a circulating path R of the holding containers 51. As shown in Fig. 6, the discharge parts 4₁₋₁₀ are provided with a conveyance conveyor 41 and a timing hopper 42 provided on the terminal side of the conveyance conveyor 41. The conveyance conveyor 41 conveys the objects G discharged from the holding containers 51 of the conveying means 5₁, 5₂ in an arrow direction shown in Fig. 6, and drops and discharges the objects G into the timing hopper 42. The timing hopper 42 is provided with a cylindrical hopper main body 421 opened on the upper and lower sides, and a gate 422 closing and opening a lower opening 421a of the hopper main body 421. The lower opening 421a is closed by the gate 422. The objects sequentially discharged from the conveyance conveyor 41 are received from an upper opening 421b, and are stored in the hopper. When all of the plurality of objects combined and selected are provided in the hopper, the gate 422 is operated to open the lower opening 421a, and the objects are dropped and discharged into the receiving box B placed below the timing hopper 42.

### [Conveying means 5₁, 5₂]

As shown in Fig. 5, the conveying means 5₁, 5₂ are conveyance conveyors which individually receive and hold the objects G weighed by the weighing means 2 using the plurality of holding containers 51 ··51, and circulate the objects G along a circulation conveying path R. The conveying means 5₁, 5₂ have a function as the discharging means for discharging the plurality of objects G combined and selected to the selected discharge part 4ₓ based on the control signal from the controlling part 3. Each of the holding containers 51 is provided with a bottom part 51a capable of being opened and closed. When each of the holding containers 51 receives the weighed objects G from the weighing means 2₁, 2₂, the bottom part 51a is closed. When the holding containers 51 holding the objects G combined and selected reach a prescribed position corresponding to the discharge part 4ₓ into which the objects G should be discharged, the bottom part 51a is opened, and the objects G are discharged to the discharge part 4ₓ.

### [Operation of weighing device 100 according to second embodiment]

The operation of the weighing device 100 according to the above second embodiment will be described. The weights of the objects G carried into the weighing device 100 are individually measured by the weighing means 2₁, 2₂, and the objects G are individually held by the holding containers 51. In this case, the controlling part 3 sorts the weight ranks of the held objects G, and stores the weights and weight ranks of the objects G in association with the holding containers 51 holding the objects G. Also, the controlling part 3 selects, from the plurality of discharge parts 4₁₋₁₀, one discharge part 4ₓ to which the plurality of objects combined and selected are discharged except for the discharge part used for discharging the objects at this time, and selects a combination of a plurality of objects in the same weight rank whose total weight is 10 kg±α of the final target weight from all the objects G held by the plurality of conveying means 5₁, 5₂.

In this case, in the controlling part 3, the integrating means integrates the measured weights of the objects G selected from the same weight rank. The calculating means calculates the final target weight difference, which is a difference between the integration weight and the final target weight. The comparing means compares the final target weight difference with the weights of the weighed objects G. The discharging control means discharges the weighed objects G to a discharge part 4ₓ of the combination having a final target weight difference approximate to the measured weights based on the comparison result. However, the selection of the objects G and the integration of weight data may be carried out not one by one but collectively for the plurality of objects. For example, the weights of the plurality of containers 51 in which the objects G are individually stored may be added up to be treated as one data. The plurality of objects collectively selected may not be continuous on the conveying path, and may extend the conveying means 5₁, 5₂.

Furthermore, the controlling part 3 opens the bottom part 51a of the holding containers 51 and outputs to the conveying means 5₁, 5₂ the control signal for dropping the objects G when the holding containers 51 holding the plurality of objects combined and selected reach above the selected discharge part 4ₓ. Thereby, the plurality of objects G combined and selected are discharged sequentially to the selected discharge part 4ₓ, and all the objects are stored in the timing hopper 42 corresponding thereto. The objects are then collectively discharged into the receiving box B placed below the gate 422 by opening the gate 422 of the hopper. The worker takes out the receiving box B into which the objects G combined and selected are dropped in exchange for an empty receiving box B, and carries out the boxing operation of the objects G.

As described more specifically, for example, all the salmon held in the holding containers 51 _{·}·51 are combined and calculated. When the combination L₁ in which the total weight is 10 kg±α is realized for five salmon L₁₁, L₁₂, L₁₃, L₁₄, L₁₅ (all the salmon have grade L) shown in Fig. 5, the controlling part 3 combines and selects these salmon. When the discharge parts which are not used for discharging therein the objects previously combined and selected in the plurality of discharge parts 4₁₋₁₀ provided are the discharge parts 4₂, 4₃, 4₅··, then the discharge part 42 having highest priority, that is, the rightmost discharge part 42 is selectd as an object discharge place. Thereby, when the holding containers 51 holding the salmon of L₁₃, L₁₄, L₁₅ combined and selected circulate and pass above the discharge part 4₂, the salmon of L₁₃, L₁₄, L₁₅ are discharged.

The above objects are combined and selected, and are discharged regardless of the sorted weight rank. For example, when the new combination L₂ of the salmon L₂₁, L₂₂, L₂₃, L₂₄, L₂₅ of grade L of the same weight rank having a total weight of 10 kg±α is realized even before the above-described salmon L₁₁, L₁₂, L₁₃, L₁₄, L₁₅ of the grade L are combined and selected and the discharge of the salmon to the discharge part 4₂ is completed, the salmon of the combination L₂ are combined and selected. The discharge part 4₃ having the highest priority in the discharge parts 4₃, 4₅ ·· which are not used at this time is selected as the object discharge place, and the discharge of the combination L₂ is indicated. That is, even when the combinations L₁, L₂ of a plurality of objects having a total weight that is a predetermined weight in the same weight rank are simultaneously selected, the objects are simultaneously parallelly discharged to different discharge parts 4₂, 4₃. When a plurality of combinations having the total weight being the above predetermined weight in a different weight rank are realized, of course, the objects are simultaneously parallelly discharged to different discharge parts.

### [Features of weighing device 100 according to second embodiment]

First, the weighing device 100 according to the above second embodiment is characterized by combining and selecting the plurality of objects having the total weight being a predetermined weight in the same weight rank regardless of the weight rank, and by selecting a discharge part 4ₓ which is not used as the object discharge place from the plurality of discharge parts 4₁₋₁₀ each time. Therefore, another plurality of objects newly combined and selected can be discharged without having to wait until all of the plurality of objects previously combined and selected in the same weight rank are discharged. As a result, the discharge cycle of the objects combined and selected can be speeded up to make the processing efficient. Also, this shortens the holding time of the objects in the conveying means 5₁, 5₂ and prevents the disadvantageous deterioration of the objects during the circulation of the objects. The discharge parts are used in common without providing the discharge part in each of the weight ranks, and thereby the total number of the discharge parts can be reduced, and the installation space and cost of the discharge parts can be suppressed.

Secondly, the weighing device 100 according to the above second embodiment is characterized in that when a plurality of combinations of a plurality of objects having a total weight that is a predetermined weight are simultaneously selected in the same weight rank, the combinations are simultaneously parallelly discharged to different discharge parts. Therefore, even when a plurality of combinations are selected in the same weight rank, the objects can be discharged for each of the combinations regardless of the discharge situation of the object of the other combinations, and as a result, the efficiency of the object discharge processing can be enhanced.

Thirdly, the weighing device 100 according to the above second embodiment is characterized by placing the priority to the arranging order of the plurality of discharge parts 4₁₋₁₀ arranged along the circulating path R and using the discharge part to which the high priority is placed when the combined and selected objects are discharged. Therefore, since the discharge parts into which the objects G are dropped are concentrated in a narrow range along the arranging order thereof, the moving distance of the worker who carries out post-processing of the discharged objects is reduced, and as a result the work burden is reduced.

Fourthly, the weighing device 100 according to the above second embodiment is characterized by being provided with the plurality of conveying means 5₁, 5₂, and by combining and selecting all the objects circulated by the conveying means 5₁, 5₂. Therefore, the weighing device 100 can enlarge the population of the objects G combined and selected, and can respond to a large number of weight ranks while securing the accuracy of the quantitative weighing.

### [Modifications of second embodiment]

(1) The discharge part 4ₓ used for discharging the objects is selected from all the plurality of discharge parts 4₁₋₁₀ regardless of the weight ranks in the above second embodiment. For example, the combination of grades 3L, 2L, L may be selected from the discharge parts 4₁₋₃. The combination of grades 3M, 2M, M may be selected from the discharge parts 4₄₋₇. The combination of grades 3S, 2S, S may be selected from the discharge parts 4₈₋₁₀ to limit the discharge parts capable of being selected according to the weight ranks.

(2) In the above second embodiment, the object discharge place is selected by the priority placed to the arranging order of the discharge parts 4₁₋₁₀. However, how to place the priority can be variously changed according to the situation. For example, when two workers box and take charge of the discharge parts 4₁₋₅ and 4₆₋₁₀ respectively, the equalization of the quantity of work is considered to be attained by placing the priority in the order of the discharge parts 4₁, 4₆, 4₂, 4₇, 4₃, 4₈ ··.

(3) In the above second embodiment and the above modifications (1), (2), the weight data of the objects G individually weighed by the weighing means 2₁, 2₂ are individually stored in association with the holding containers 51 individually holding the objects G. However, the weight data of the objects G held by the plurality of holding containers 51 which are continuous on the conveying path of the conveying means 5₁, 5₂ may be stored as a mass of data; the plurality of objects G may be successively discharged to one discharge part; and the mass of weight data may be integrated by the integrating means. This modification can attain the speed-up of the discharge processing and can shorten the holding time of the objects in the conveying means 5₁, 5₂, which circulates the objects G. As the mass of data, the total weight data of the plurality of objects may be employed.

The weighing device of the present invention is not limited to the above first and second embodiments, and it is apparent that various changes may be added without departing from the scope of the present invention.

### INDUSTRIAL APPLICABILITY

The weighing device of the present invention can be said to contribute to quantitative weighing in which as well as natural objects, various objects and the like having various weights are collected to predetermined collection places.

## Claims

1. A weighing device comprising:
a weighing means for measuring weights of objects;
a conveying means for conveying the objects weighed by the weighing means;
a plurality of discharge parts to which the objects conveyed by the conveying means are discharged;
a discharging means for discharging the objects to the discharge parts; and
a controlling part,
the controlling part comprising:
a weight setting means for setting a final target weight of a plurality of objects discharged to the discharge parts;
an integrating means for integrating the measured weights measured by the weighing means in each of the discharge parts;
a calculating means for calculating a final target weight difference in each of the discharge parts, the final target weight difference being a difference between an integration weight integrated by the integrating means and the final target weight;
a storing means for storing the final target weight, the integration weight, and the final target weight difference; and
a discharging control means for discharging the weighed objects to a discharge part having a final target weight difference approximate to the weighed weights of the objects.

2. The weighing device according to claim 1, wherein the measured weights measured by the weighing means are a total weight of objects stored in at least two containers continuous on a conveying path of the conveying means.

3. The weighing device according to claim 1 or 2, wherein the controlling part sorts the individual objects weighed by the weighing means to predetermined weight ranks, selects a combination of a plurality of objects having a total weight that is the final target weight in the same weight rank sorted, and controls so that a plurality of objects newly combined and selected are discharged to a discharge part other than a discharge part used for discharging a plurality of objects previously combined and selected.

4. The weighing device according to claim 1 or 2, wherein the controlling part sorts the individual objects weighed by the weighing means to predetermined weight ranks, selects a combination of a plurality of objects having a total weight that is the final target weight in the same weight rank sorted, and controls so that when at least two combinations of a plurality of objects having a total weight that is the final target weight are simultaneously selected in the same weight rank, the two combinations are parallelly discharged to different discharge parts.

5. The weighing device according to claim 3 or 4, wherein priority is placed to the plurality of discharge parts and a discharge part having higher priority is controlled to be used.

6. The weighing device according to any one of claims 3 to 5, wherein the conveying means discharges the combined and selected objects when the combined and selected objects reach a prescribed position corresponding to a discharge part into which the objects should be discharged while individually circulating the weighed objects.

7. The weighing device according to any one of claims 3 to 5, wherein the conveying means circulates a plurality of holding containers which hold individually the weighed objects, and discharges the combined and selected objects when a container holding the objects reach a prescribed position corresponding to a discharge part to which the objects should be discharged.

8. The weighing device according to claim 6 or 7, comprising a plurality of conveying means, wherein all the objects circulated by the plurality of conveying means are combined and selected.
